# FASCICULE DE BREVET EUROPEEN

(11) **EP 2 890 587 B1**
(45) Date de publication et mention de la délivrance du brevet: **03.10.2018**
(21) Numéro de dépôt: 13758916.4
(22) Date de dépôt: 25.07.2013
(51) Int. Cl.: B60L 11/18, B60W 30/188, B60W 20/00

(54) **PROCÉDÉ DE PILOTAGE D'UNE MACHINE ÉLECTRIQUE LIMITANT LES PERTES ÉNERGÉTIQUES**
VERFAHREN ZUR STEUERUNG EINER ELEKTRISCHEN MASCHINE ZUR BEGRENZUNG VON STROMVERLUSTEN
METHOD FOR CONTROLLING AN ELECTRIC MACHINE RESTRICTING ENERGY LOSSES

(30) Priorité: 29.08.2012 FR 1258083
(43) Date de publication de la demande: 08.07.2015
(73) Titulaire: Renault S.A.S., 92100 Boulogne-Billancourt (FR)
(72) Inventeur: ERCAN, Ali, F-78280 Guyancourt (FR); BUI-VAN, Anh-Linh, F-38250 Saint Nizier Du Moucherotte (FR)
(86) Numéro de dépôt international: PCT/FR2013/051798
(87) Numéro de publication internationale: WO 2014/033381

(56) Documents cités:
- DE-A1-102011 003 778
- JP-A- 2008 109 749
- US-A- 6 140 799
- US-A1- 2002 175 644
- US-A1- 2006 164 034
- US-A1- 2011 006 723
- US-B1- 7 208 894

## Description

La présente invention concerne la commande d'une chaîne de traction et/ou propulsion comprenant une machine électrique d'entraînement d'un véhicule automobile, notamment un véhicule électrique ou hybride, la machine électrique étant alimentée par l'intermédiaire d'une batterie d'accumulateurs électriques, ou cellules, répartis en une pluralité d'unités élémentaires appelées modules, connectés électriquement les uns aux autres. Elle concerne plus précisément un procédé de pilotage d'une telle machine électrique dans lequel la batterie est du type à architecture commutée, où chaque module en particulier peut être sélectivement déconnecté électriquement de l'ensemble de modules de la batterie.

Une telle architecture est bien connue de l'homme du métier notamment par les exemples qu'en donne le document de brevet US 2012/0091963, qui illustrent notamment des systèmes de déconnexion de modules, qui permettent de déconnecter un module en défaut de fonctionnement, ou potentiellement en défaut de fonctionnement, de l'ensemble de modules auquel il est électriquement couplé. Ces systèmes de déconnexion de cellules ou modules intégrés à la batterie peuvent également être employés pour la mise en oeuvre de stratégies d'équilibrage entre modules de la batterie.

Dans ce contexte, un domaine d'application envisagé par la présente invention est notamment la gestion des pertes énergétiques de la machine électrique afin d'optimiser le bilan énergétique du véhicule.

On connaît de la demande de brevet WO 2008/093687 un procédé de limitation des pertes énergétiques dans la machine électrique afin d'augmenter l'autonomie de roulage. Ce procédé est basé sur des cartographies qui donnent des valeurs de pertes en fonction du couple et de la vitesse de rotation de la machine électrique. Ainsi, à tension constante, les points de fonctionnement de la machine électrique sont cantonnés dans un domaine de bon rendement de celle-ci.

Normalement, la tension en sortie de batterie est imposée par la batterie et son état de charge. Dans la plupart des cas, cette tension en sortie de batterie est ensuite directement appliquée en entrée de l'électronique de puissance de la machine électrique, dont le rôle est de convertir la tension côté batterie pour piloter et alimenter la machine électrique. Or, cette conversion est à l'origine de pertes dans l'électronique de puissance, notamment les pertes par conduction et les pertes par commutation, et les pertes par commutation sont directement liées au niveau de la tension à découper en entrée, c'est-à-dire à la tension en sortie de batterie. Aussi, lorsque la tension en sortie de batterie est directement appliquée en entrée de l'électronique de puissance de la machine électrique, la conversion s'effectue alors complètement par l'électronique de puissance, avec les pertes par commutation qui en résultent.

On connaît cependant du document WO 2009/116215 un dispositif permettant de faire varier la tension appliquée en entrée de la machine électrique, grâce à la présence d'un convertisseur de tension (« boost converter ») disposée entre la sortie de la batterie et l'entrée de l'électronique de puissance de la machine électrique. Une telle architecture permet en particulier de diminuer les courants côté moteur et donc, de redimensionner favorablement celui-ci afin d'optimiser le bilan énergétique global. Cependant, la présence d'un convertisseur en sortie de la batterie a un impact défavorable en termes de coût et d'encombrement notamment, puisqu'il constitue un système supplémentaire à intégrer.

Le document US 2006/164034 A1 décrit un véhicule hybride comportant une batterie à tension variable présentant des inconvénient similaires.

Les documents US6140799A, DE102011003778 et US2002/175644 décrivent une configuration de batterie ayant des modules en série dans laquelle chaque module dudit ensemble peut être déconnecté dudit ensemble pour varier la tension mise À disposition par la batterie.

Un but de l'invention est de fournir un procédé de pilotage d'une chaîne de traction et/ou propulsion constituée notamment et non exclusivement d'une machine électrique, de son électronique, d'une transmission et d'un système de freinage, qui puisse se combiner avec les stratégies liées aux batteries à architecture commutée, en permettant d'optimiser le bilan énergétique du véhicule, sans les limitations évoquées précédemment.

Dans ce but, la présente invention propose un procédé de pilotage d'une chaîne de traction et/ou propulsion comprenant une machine électrique d'entraînement d'un véhicule automobile électrique ou hybride alimentée par une batterie par l'intermédiaire d'un circuit de commande associé à un circuit électronique de puissance, ladite batterie comportant un ensemble de modules d'au moins un accumulateur électrique chacun, lesdits modules étant connectés en série les uns aux autres, ledit procédé comprenant une étape de commutation desdits modules dans laquelle chaque module dudit ensemble peut être sélectivement déconnecté dudit ensemble. Selon l'invention, le procédé comprend les étapes suivantes : une étape de calcul des pertes énergétiques en fonction de caractéristiques courantes de fonctionnement de ladite chaîne de traction et/ou propulsion, respectivement pour chacune d'une pluralité de configurations possibles de commutation desdits modules ; une étape de détermination d'au moins une configuration de commutation optimale desdits modules minimisant les pertes énergétiques parmi ladite pluralité de configurations possibles de commutation ; et, une étape d'activation de ladite étape de commutation desdits modules selon ladite configuration de commutation optimale desdits modules minimisant les pertes énergétiques; ladite étape de détermination de ladite configuration de commutation optimale comprend les sous-étapes suivantes si plusieurs configurations de commutation desdits modules minimisent les pertes dans des proportions sensiblement égales : une sous-étape d'estimation de la température de batterie induite par chacune desdites configurations de commutation desdits modules minimisant les pertes ; et une sous-étape de détermination de ladite configuration minimisant la température de batterie ; tandis que ladite étape d'activation de ladite étape de commutation desdits modules est effectuée selon ladite configuration de commutation optimale desdits modules minimisant les pertes et la température de batterie.

Ainsi, la stratégie de pilotage de l'invention réside dans l'utilisation du système de commutation des modules de la batterie afin de modifier le nombre de modules connectés en série dans l'ensemble de modules constituant la batterie, dans le but avantageux de pouvoir modifier la tension en sortie de batterie qui est appliquée à l'entrée du circuit électronique de puissance et, notamment, dans le but de pouvoir appliquer une tension propre à minimiser les pertes énergétiques et ce, sans qu'il soit nécessaire d'intégrer un système supplémentaire comme par exemple le convertisseur utilisé dans la solution présentée dans le document WO 2009/116215. En particulier, pour des caractéristiques de fonctionnement données de la machine électrique, on peut ainsi modifier à la baisse la tension en sortie de la batterie, ce qui permet avantageusement d'augmenter le rendement énergétique global du véhicule. Aussi, par contraste aux solutions actuelles de minimisation des pertes énergétiques, où la tension appliquée à l'entrée de l'électronique de puissance est imposée par la batterie et son état de charge, l'invention procure avantageusement un degré de liberté supplémentaire pour agir sur le rendement énergétique global du véhicule, en offrant la possibilité de diminuer le niveau de tension en sortie de la batterie par rapport à la tension maximale de la batterie et, ainsi, de diminuer les pertes par commutation du côté de l'électronique de puissance de la machine électrique, qui sont directement liées à ce niveau de tension.

Selon un mode de mise en oeuvre avantageux, lesdites conditions courantes de fonctionnement sont établies à partir d'une commande appliquée à ladite machine électrique représentant une consigne de couple que ladite machine électrique doit réaliser.

Préférentiellement, ladite commande de consigne de couple est générée en fonction de la position d'un organe de commande d'accélérateur, notamment une pédale.

Par ailleurs, lesdites conditions courantes de fonctionnement peuvent comprendre le couple fourni par la machine électrique déterminé en fonction de ladite commande de consigne de couple.

De préférence, lesdites conditions courantes de fonctionnement incluent le régime de ladite machine électrique.

Selon un mode de mise en oeuvre avantageux, l'étape de calcul des pertes énergétiques pour chacune de la pluralité de configurations de commutation possibles desdits modules est basée sur des cartographies fournissant, pour chacune desdites configurations, la valeur des pertes énergétiques dans ladite machine électrique et dans ledit circuit électronique de puissance en fonction de conditions de fonctionnement données et en fonction de valeurs de tension en sortie de ladite batterie.

Des fonctions simples pourront aussi être associées à ces cartographies, afin par exemple d'interpoler les différentes cartographies pour d'autres tensions, ou encore de mieux prendre en compte la température dans le calcul des pertes.

Avantageusement, ladite étape de détermination de ladite configuration de commutation optimale desdits modules comprend en outre une étape de sélection du ou des modules à déconnecter préférentiellement, ladite sélection étant basée sur un état de charge et/ou un niveau d'échauffement respectifs desdits modules.

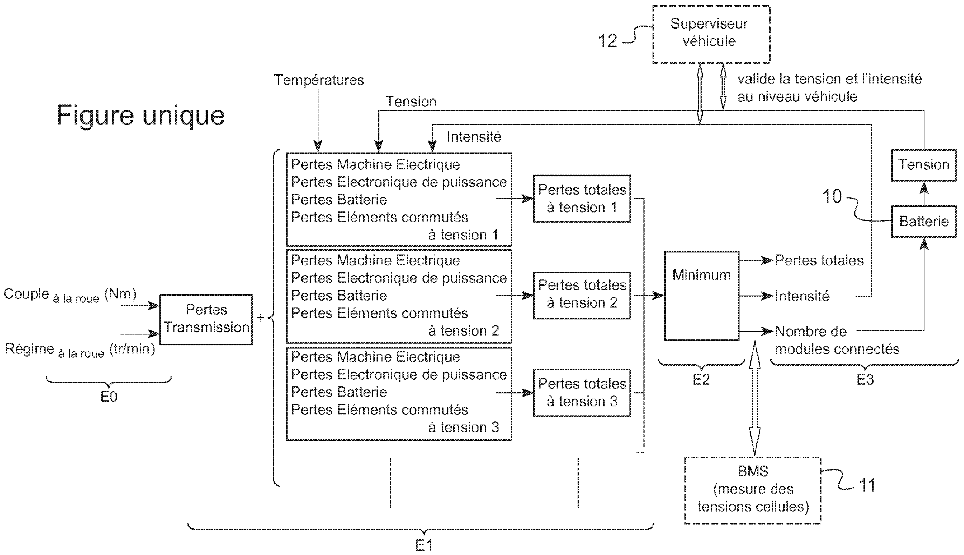

D'autres particularités et avantages de l'invention ressortiront à la lecture de la description faite ci-après d'un mode de réalisation particulier de l'invention, donné à titre indicatif mais non limitatif, en référence à la figure 1 annexée représentant un organigramme du procédé conforme à l'invention.

Le système d'entraînement du véhicule automobile par exemple électrique ou hybride, comprend une machine électrique (non représentée). L'alimentation en courant de la machine électrique est réalisée par une batterie 10 de stockage d'énergie électrique reliée à la machine électrique par un circuit électronique de puissance (non représenté), qui comprend un convertisseur et du câblage entre la batterie et celui-ci. La batterie 10, communément appelée batterie haute tension, comprend n modules constitués chacun d'au moins une cellule d'accumulateur électrique pouvant être modélisée de façon simplifiée par un montage série d'un générateur de tension continue et d'une résistance interne, les différents modules de la batterie étant connectés en série.

La batterie 10 est classiquement contrôlée par un calculateur électronique 11, appelée BMS (pour « Battery Monitoring System » en anglais), qui permet de contrôler l'ensemble des paramètres de chaque cellule en fonction de mesures effectuées par des capteurs de courant, de tension, de température, etc.

Par ailleurs, la batterie est équipée de moyens utilisés pour mettre en oeuvre des stratégies d'équilibrage entre modules de la batterie. Ces moyens permettent en particulier de mettre en circuit des branches de dérivation individuelles montées en parallèle de chaque module interconnecté en série, de manière à pouvoir, le cas échéant, déconnecter (on dit encore « by-passer ») sélectivement un module de l'ensemble des modules constituant la batterie à des fins d'équilibrage de la batterie. Pour ce faire, chaque module de la batterie est connecté à l'ensemble des modules de la batterie via des organes de commutation, respectivement série et parallèle, et la batterie est munie d'un système de commutation des modules, destiné à commander les organes de commutation, selon une stratégie d'équilibrage requise. Ainsi, dans cette architecture commutée, chaque module de la batterie peut être sélectivement connecté ou déconnecté (« by-passé ») de l'ensemble des modules constituant la batterie par une commande appropriée des organes de commutation des modules.

Un calculateur électronique de commande 12, de type superviseur, reçoit des informations des différents organes du véhicule et, en particulier de la batterie haute tension 10. Ce superviseur principal 12 est apte à gérer les requêtes et contraintes découlant des différents systèmes connectés au réseau haute tension du véhicule et dialogue notamment avec l'électronique de puissance, qui pilote la machine électrique, ce pilotage s'effectuant notamment en fonction de paramètres fixés par le conducteur, tels que l'enfoncement de la pédale d'accélérateur du véhicule.

La stratégie de pilotage de l'invention est mise en oeuvre à partir d'un algorithme, qui peut être interne au superviseur principal 12, ou bien interne au calculateur BMS 11, mais qui doit dans ce cas communiquer avec le superviseur principal 12. Cet algorithme prend en compte, dans une étape E0, des caractéristiques courantes de fonctionnement de la chaîne de traction et/ou propulsion, établies à partir de la commande appliquée à la machine électrique, qui découle par exemple de l'enfoncement de la pédale d'accélérateur, dont la position traduit une consigne de couple à appliquer sur les roues du véhicule pour que sa vitesse de déplacement corresponde à la vitesse demandée par le conducteur. L'algorithme reçoit également en entrée à l'étape E0 une information concernant le régime de la machine électrique.

Pour une configuration de fonctionnement donnée correspondant au point de fonctionnement couple-régime établi à l'étape E0, la stratégie de pilotage de l'invention consiste à modifier la configuration de commutation des modules de la batterie, i.e. le nombre de modules interconnectés en série, en déconnectant sélectivement un certain nombre de modules de la batterie, de manière à modifier la tension en sortie de la batterie, dans le but d'augmenter le rendement énergétique global du véhicule.

Plus particulièrement, le système de commutation des modules de la batterie permet de « by-passer » un certain nombre de modules, définissant autant de configurations possibles de commutation des modules de la batterie parmi les cas suivants, au choix :
Cas 0 : aucun module by-passé ;
Cas 1 : 1 module by-passé ;
Cas 2 : 2 modules by-passés ;
Etc.

On fixera toutefois un nombre maximal de modules pouvant être déconnectés de la batterie haute tension 10, car il existe une limite de tension basse acceptable de part la conception du véhicule, en deçà de laquelle on ne peut pas aller, sans quoi les systèmes embarqués connectés au réseau haute tension du véhicule ne pourraient plus fonctionner.

Dès lors qu'on connaît la configuration de commutation des modules de la batterie, à savoir le nombre de modules by-passés, ainsi que la tension fournie par les modules, par l'intermédiaire du calculateur BMS mesurant les tensions de chaque cellule, il est possible de connaître pour chacun des cas identifiés ci-dessus la tension fournie en sortie de la batterie haute tension 10.

Ainsi, dans une étape E1, pour un point de fonctionnement couple-régime donné, l'algorithme est conçu pour, dans un premier temps, effectuer le bilan des pertes énergétiques totales pour les différents cas (Cas 0, Cas 1, etc.) identifiés ci-dessus, correspondant chacun à une configuration de commutation possible des modules de la batterie et donc à une tension donnée en sortie de la batterie, respectivement à tension 1, tension 2, tension 3, etc.

En particulier, les pertes prises en compte à l'étape E1 pour l'estimation des pertes énergétiques induites respectivement pour chaque configuration de commutation possible des modules de la batterie, comprennent les pertes liées à la transmission, qui sont fonction principalement du régime et qui sont indépendantes de la tension en sortie de la batterie.

Les pertes prises en compte à l'étape E1 comprennent également les pertes dans la machine électrique et dans le circuit électronique de puissance, qui sont fonction de la température de ces organes, du couple et du régime de la machine électrique et de la tension fournie par la batterie. Le calcul de ces pertes peut être basé sur des cartographies de valeurs de pertes énergétiques dans la machine électrique et le circuit électronique de puissance en fonction du couple et du régime et en fonction de la valeur de tension fournie par la batterie, à différentes tensions correspondant aux différentes configurations de commutation possibles des modules de la batterie.

Les pertes énergétiques prises en compte à l'étape E1 comprennent encore les pertes internes liées à la batterie proprement dite, hors le système de commutation des modules, qui sont fonction de la résistance interne des cellules constituant les modules de la batterie, ces résistances internes étant elles-mêmes fonction de la température des cellules, des résistances des connectiques et du nombre de modules by-passés.

Les pertes énergétiques prises en compte à l'étape E1 comprennent enfin les pertes liées au système de commutation des modules de la batterie, qui sont fonction du courant de batterie principalement, en considérant que ces pertes sont des pertes par conduction, les pertes par commutation des organes de commutation étant largement négligeables. A cet égard, les pertes par conduction sont pratiquement identiques que le module soit by-passé ou non, dans la mesure où dans un cas, le courant de batterie traverse un organe de commutation en série avec le module et dans l'autre cas, un organe de commutation en parallèle, généralement identique à l'organe de commutation série. Au final, l'algorithme permet à l'étape E1 de calculer les pertes énergétiques globales pour un point de fonctionnement couple-régime donné, dans chacune des configurations de commutation possibles des modules, soient respectivement les pertes totales à tension 1, les pertes totales à tension 2, les pertes totales à tension 3, etc.

Il convient de noter que le courant de batterie résulte du régime, du couple, de la tension et des pertes. Pour un point couple-régime donné, si un ou plusieurs modules sont by-passés, induisant une diminution de la tension en sortie de batterie, alors le courant de batterie augmente. Aussi, on prendra également en compte, en tant que paramètre d'entrée pour le calcul des pertes, l'intensité du courant de batterie.

Une fois les pertes totales estimées à l'étape E1 pour un point de fonctionnement couple-régime donné dans chacune des configurations de commutation possibles des modules, l'algorithme est conçu pour déterminer, dans une étape E2, la configuration de commutation optimale des modules minimisant les pertes énergétiques, parmi la pluralité de configurations possibles de commutation des modules.

Dans l'hypothèse où plusieurs configurations de commutation des modules minimisent les pertes énergétiques dans des proportions sensiblement égales, l'étape E2 de détermination de la configuration de commutation optimale tiendra compte en outre de réchauffement de la batterie induite par chaque configuration de commutation des modules identifiée comme permettant de minimiser les pertes, afin de déterminer la configuration de commutation optimale. En particulier, dans cette situation, l'algorithme est conçu pour estimer la température de batterie induite par chacune des configurations de commutation des modules minimisant les pertes et pour déterminer la configuration minimisant la température de batterie, qui sera retenue comme étant la configuration de commutation optimale des modules permettant de minimiser les pertes et la température.

De cette manière, l'algorithme est à même de déterminer la configuration de commutation optimale des modules, propre à minimiser les pertes énergétiques globales et, éventuellement la température de batterie et, par conséquent, permet de déterminer la tension résultante en sortie de batterie qu'il convient d'appliquer en entrée de l'électronique de puissance pour optimiser le bilan énergétique du véhicule pour un point de fonctionnement couple-régime donné en entrée.

Ainsi, dans une étape E3, l'algorithme est conçu pour activer la configuration de commutation optimale des modules, en modifiant le nombre de modules connectés de l'ensemble de modules interconnectés de la batterie conformément à cette configuration de commutation optimale préalablement déterminée. Pour ce faire, l'algorithme est conçu pour générer un ordre de commutation spécifiant le ou les modules à by-passer pour atteindre la configuration de commutation optimale des modules, et pour transmettre ledit ordre au système de commutation des modules destiné à commuter les modules en fonction dudit ordre, de manière à modifier la tension en sortie de batterie, dans le but d'optimiser les pertes énergétiques. Afin d'arriver à la configuration optimale, le système de commutation des modules pourra être amené à intégrer des sous-étapes de commutation nécessaires. Par exemple si plusieurs modules doivent être by-passés, alors le système de commutation pourra les by-passer successivement selon un ordre à déterminer, et non pas simultanément, afin de simplifier et sécuriser la commutation.

L'étape E2 de détermination de la configuration de commutation optimale pourra aussi intégrer une étape de sélection du ou des modules à by-passer préférentiellement parmi les différents modules de la batterie. Ce choix du ou des modules à by-passer préférentiellement pourra être effectué sur la base d'un état de charge et/ou d'un niveau d'échauffement respectifs des modules de la batterie. Ainsi, si les différents modules de la batterie possèdent des états de charge très différents, on choisira de by-passer préférentiellement les modules les moins chargés. Egalement, si les différents modules de la batterie présentent des niveaux d'échauffement très différents, on choisira de by-passer préférentiellement les modules présentant les niveaux d'échauffement les plus importants. Dans ces cas, l'ordre de commutation devra aussi contenir, en plus du nombre de modules à by-passer, une information d'identification, par exemple un numéro, associée à ou aux modules à by passer préférentiellement.

On pourra avantageusement prévoir de soumettre l'activation de la commutation des modules selon la configuration de commutation optimale déterminée, à un processus de validation préalable du superviseur véhicule 12, dans lequel le superviseur 12 validera ou non la possibilité de modifier la tension en sortie de batterie telle qu'imposée par la configuration de commutation optimale des modules. En effet, le superviseur gère les priorités et limitations issues des différents systèmes producteurs-consommateurs liés au réseau haute tension du véhicule. Aussi, à titre d'exemple, il peut être choisi de donner priorité à un mode de gestion de la batterie mettant en oeuvre le système de commutation des modules à des fins d'équilibrage de la batterie, de façon connue en soi, plutôt qu'à des fins d'optimisation du bilan énergétique du véhicule, comme proposées par la présente invention. Ce faisant, la configuration de commutation optimale requise n'est pas activée.

Par ailleurs, si le point couple-régime établi à l'étape E0 correspond à une puissance élevée, alors l'algorithme choisira par défaut la configuration de commutation correspondant au Cas 0 identifié plus haut, dans lequel aucun module de l'ensemble de modules interconnectés n'est by-passé, dans la mesure où, selon ces caractéristiques de fonctionnement de la machine électrique, on a besoin de la tension maximale en sortie de la batterie afin de pouvoir atteindre la puissance élevée requise.

Enfin, de manière classique, l'algorithme pourra intégrer des hystérésis afin de ne pas commuter les modules avec une fréquence trop élevée.

## Revendications

1. Procédé de pilotage d'une chaîne de traction et/ou propulsion comprenant une machine électrique d'entraînement d'un véhicule automobile électrique ou hybride alimentée par une batterie (10) par l'intermédiaire d'un circuit de commande associé à un circuit électronique de puissance, ladite batterie (10) comportant un ensemble de modules d'au moins un accumulateur électrique chacun, lesdits modules étant connectés en série les uns aux autres, ledit procédé comprenant une étape de commutation desdits modules dans laquelle chaque module dudit ensemble peut être sélectivement déconnecté dudit ensemble,
ledit procédé comprenant :
- une étape (E1) de calcul des pertes énergétiques de la chaîne de traction et/ou de propulsion en fonction de caractéristiques courantes de fonctionnement de ladite chaîne, respectivement pour chacune d'une pluralité de configurations possibles de commutation desdits modules ;
- une étape (E2) de détermination d'au moins une configuration de commutation optimale desdits modules minimisant les pertes énergétiques parmi ladite pluralité de configurations possibles de commutation desdits modules ; et
- une étape (E3) d'activation de ladite étape de commutation desdits modules selon ladite configuration de commutation optimale desdits modules minimisant les pertes énergétiques,
ledit procédé étant **caractérisé en ce que** l'étape (E2) de détermination de la configuration de commutation optimale comprend les sous-étapes suivantes si plusieurs configurations de commutation desdits modules minimisent les pertes dans des proportions égales :
- une sous-étape d'estimation de la température de batterie induite par chacune desdites configurations de commutation desdits modules minimisant les pertes ;
- une sous-étape de détermination de ladite configuration minimisant la température de batterie ;
ladite étape d'activation de ladite étape de commutation desdits modules étant effectuée selon ladite configuration de commutation optimale desdits modules minimisant les pertes et la température de batterie.

2. Procédé selon la revendication 1, **caractérisé en ce que** lesdites conditions courantes de fonctionnement sont établies à partir d'une commande appliquée à ladite machine électrique représentant une consigne de couple que ladite machine électrique doit réaliser.

3. Procédé selon la revendication 2, **caractérisé en ce que** ladite commande de consigne de couple est générée en fonction de la position d'un organe de commande d'accélérateur, notamment une pédale.

4. Procédé selon l'une quelconque des revendications 2 ou 3, **caractérisé en ce que** lesdites conditions courantes de fonctionnement comprennent le couple fourni par la machine électrique déterminé en fonction de ladite commande de consigne de couple.

5. Procédé selon la revendication 4, **caractérisé en ce que** lesdites conditions courantes de fonctionnement incluent le régime de ladite machine électrique.

6. Procédé selon l'une quelconque des revendications précédentes, **caractérisé en ce que** ladite étape de calcul (E1) des pertes énergétiques pour chacune de la pluralité de configurations de commutation possibles desdits modules est basée sur des cartographies fournissant, pour chacune desdites configurations, la valeurs des pertes énergétiques dans ladite machine électrique et dans ledit circuit électronique de puissance en fonction de conditions de fonctionnement données et en fonction de valeurs de tension en sortie de ladite batterie.

7. Procédé selon l'une quelconque des revendications précédentes, **caractérisé en ce que** ladite étape (E2) de détermination de ladite configuration de commutation optimale desdits modules comprend en outre une étape de sélection du ou des modules à déconnecter préférentiellement basée sur un état de charge et/ou un niveau d'échauffement respectifs desdits modules.

## Patentansprüche

1. Verfahren zum Steuern eines Trieb- und/oder Antriebsstrangs, der eine elektrische Maschine zum Antrieb eines Elektro- oder Hybrid-Kraftfahrzeugs enthält, die von einer Batterie (10) mittels eines einem elektronischen Leistungskreis zugeordneten Steuerkreises gespeist wird, wobei die Batterie (10) eine Einheit von Modulen von je mindestens einem elektrischen Akkumulator aufweist, wobei die Module miteinander in Reihe geschaltet sind, wobei das Verfahren einen Schritt der Umschaltung der Module enthält, in dem jedes Modul der Einheit selektiv von der Einheit abgeschaltet werden kann, wobei das Verfahren enthält:
- einen Schritt (E1) der Berechnung der Energieverluste des Trieb- und/oder Antriebsstrangs abhängig von laufenden Betriebsmerkmalen des Strangs, für jede einer Vielzahl von möglichen Umschaltkonfigurationen der Module;
- einen Schritt (E2) der Bestimmung mindestens einer optimalen Umschaltkonfiguration der Module, die die Energieverluste minimiert, unter der Vielzahl von möglichen Umschaltkonfigurationen der Module; und
- einen Schritt (E3) der Aktivierung des Umschaltschritts der Module gemäß der optimalen Umschaltkonfiguration der Module, die die Energieverluste minimiert,
wobei das Verfahren **dadurch gekennzeichnet ist, dass** der Schritt (E2) der Bestimmung der optimalen Umschaltkonfiguration die nachfolgenden Teilschritte enthält, wenn mehrere Umschaltkonfigurationen der Module die Verluste in gleichen Anteilen minieren:
- einen Teilschritt der Schätzung der Batterietemperatur, die von jeder der Umschaltkonfigurationen der Module induziert wird, die die Verluste minimieren;
- einen Teilschritt der Bestimmung der Konfiguration, die die Batterietemperatur minimiert;
wobei der Schritt der Aktivierung des Umschaltschritts der Module gemäß der optimalen Umschaltkonfiguration der Module ausgeführt wird, die die Verluste und die Batterietemperatur minimiert.

2. Verfahren nach Anspruch 1, **dadurch gekennzeichnet, dass** die laufenden Betriebsbedingungen ausgehend von einer an die elektrische Maschine angewendeten Steuerung erstellt werden, die einen Drehmomentsollwert darstellt, den die elektrische Maschine realisieren soll.

3. Verfahren nach Anspruch 2, **dadurch gekennzeichnet, dass** die Drehmoment-Sollwertsteuerung abhängig von der Stellung eines Gaspedal-Steuerorgans erzeugt wird, insbesondere eines Pedals.

4. Verfahren nach einem der Ansprüche 2 oder 3, **dadurch gekennzeichnet, dass** die laufenden Betriebsbedingungen das von der elektrischen Maschine gelieferte Drehmoment enthalten, das abhängig von der Drehmoment-Sollwertsteuerung bestimmt wird.

5. Verfahren nach Anspruch 4, **dadurch gekennzeichnet, dass** die laufenden Betriebsbedingungen die Drehzahl der elektrischen Maschine umfassen.

6. Verfahren nach einem der vorhergehenden Ansprüche, **dadurch gekennzeichnet, dass** der Schritt der Berechnung (E1) der Energieverluste für jede der Vielzahl von möglichen Umschaltkonfigurationen der Module auf Kennfeldern basiert, die für jede der Konfigurationen den Wert der Energieverluste in der elektrischen Maschine und im elektronischen Leistungskreis abhängig von gegebenen Betriebsbedingungen und abhängig von Spannungswerten am Ausgang der Batterie liefern.

7. Verfahren nach einem der vorhergehenden Ansprüche, **dadurch gekennzeichnet, dass** der Schritt (E2) der Bestimmung der optimalen Umschaltkonfiguration der Module außerdem einen Schritt der Auswahl des Moduls oder der Module enthält, die vorzugsweise abzuschalten sind, basierend auf einem Ladezustand und/oder einem Erwärmungspegel der Module.

## Claims

1. Method for controlling a traction and/or propulsion chain which comprises an electric machine for driving an electric or hybrid motor vehicle which is supplied with electric power by a battery (10) via a control circuit which is associated with an electronic power circuit, said battery (10) having a set of modules each having at least one electric accumulator, the modules being connected in series with each other, said method comprising a step of commutation of the modules in which each module of the set may be selectively disconnected from the set,
said method comprising:
- a step (E1) of calculating the energy losses of the traction and/or propulsion chain in accordance with common operating characteristics of said chain, for each of a plurality of possible commutation configurations of said modules, respectively;
- a step (E2) of determining at least one optimum commutation configuration of the modules which minimizes the energy losses from the plurality of possible commutation configurations of said modules; and
- a step (E3) of activating said commutation step of said modules in accordance with the optimum commutation configuration of said modules which minimizes the energy losses,
said method being **characterized in that** the step (E2) of determining the optimum commutation configuration comprises the following sub-steps if a plurality of commutation configurations of said modules minimize the losses in equal proportions:
- a sub-step of estimating the battery temperature brought about by each of the commutation configurations of said modules which minimize the losses;
- a sub-step of determining said configuration which minimizes the battery temperature;
said step of activating the commutation step of said modules being carried out in accordance with the optimum commutation configuration of said modules which minimizes the losses and the battery temperature.

2. Method according to Claim 1, **characterized in that** said common operating conditions are established based on a command which is applied to said electric machine and which represents a torque instruction that said electric machine has to carry out.

3. Method according to Claim 2, **characterized in that** said torque instruction command is generated in accordance with the position of an accelerator control member, in particular a pedal.

4. Method according to either one of Claims 2 and 3, **characterized in that** said common operating conditions comprise the torque which is provided by the electric machine and which is determined in accordance with said torque instruction command.

5. Method according to Claim 4, **characterized in that** said common operating conditions include the speed of the electric machine.

6. Method according to any one of the preceding claims, **characterized in that** said step (E1) of calculating the energy losses for each of the plurality of possible commutation configurations of said modules is based on mapping which provides, for each of said configurations, the value of the energy losses in said electric machine and in said electronic power circuit in accordance with specific operating conditions and in accordance with voltage values at the output of said battery.

7. Method according to any one of the preceding claims, **characterized in that** said step (E2) of determining said optimum commutation configuration of said modules further comprises a step of selecting the module(s) to be preferentially disconnected based on a respective state of charge and/or heating level of said modules.
